# EUROPÄISCHE PATENTSCHRIFT

(11) **EP 4 118 405 B1**
(45) Veröffentlichungstag und Bekanntmachung des Hinweises auf die Patenterteilung: **01.05.2024**
(21) Anmeldenummer: 21712110.2
(22) Anmeldetag: 11.03.2021
(51) Int. Cl.: G01J 5/00, G01J 5/02, G01J 5/08, G08B 13/193, H05B 47/13

(54) **INFRAROTBEWEGUNGSMELDER**
INFRARED MOTION DETECTOR
DÉTECTEUR DE MOUVEMENT INFRAROUGE

(30) Priorität: 13.03.2020 DE 102020106993
(43) Veröffentlichungstag der Anmeldung: 18.01.2023
(73) Patentinhaber: Steinel GmbH, 33442 Herzebrock-Clarholz (DE)
(72) Erfinder: SEHLHOFF, Stefan, 33442 Herzebrock-Clarholz (DE)
(74) Vertreter: Müller Hoffmann & Partner
(86) Internationale Anmeldenummer: PCT/EP2021/056182
(87) Internationale Veröffentlichungsnummer: WO 2021/180846

(56) Entgegenhaltungen:
- DE-A1- 10 242 483
- GB-A- 2 369 450
- JP-A- 2006 018 750
- JP-A- 2010 185 668
- JP-A- 2015 225 031
- US-A- 4 734 585

## Beschreibung

Die vorliegende Erfindung betrifft einen Infrarotbewegungsmelder sowie darüber gesteuerte Leuchtenvorrichtungen.

Passiv-Infrarotsensoren (PIR-Sensoren) werden in einer Vielzahl von Anwendungen als Bewegungsmelder eingesetzt. Das Wirkprinzip von PIR-Sensoren ist es, die von einem sich im Sichtfeld des Sensors befindlichen Objekts abgestrahlte Wärme in Form von Infrarotstrahlung zu detektieren. Insbesondere die Veränderung der empfangenen Strahlung kann detektiert werden, wodurch die Erfassung von Bewegungen möglich wird. Ein Passiv-Infrarot-Bewegungsmelder ist aus der DE 10242483 A1 bekannt.

PIR-Sensoren weisen jedoch das Problem auf, dass zwei verschiedene Erfassungsgenauigkeiten vorliegen. Zum einen können Bewegungen, die in festem Abstand um den Sensor herum durchgeführt werden (tangentiale Bewegung), dadurch relativ leicht erkannt werden, dass durch die Sensoroptik definierte strahlenförmige Sichtbereiche (Sichtstrahlen) durch die Bewegung geschnitten werden. Andererseits tritt bei direkten Bewegungen auf den Sensor zu (radiale Bewegung) kein derartiges Schneiden von Sichtstrahlen auf. Es verändert sich zwar im Prinzip die Größe des wahrgenommenen Objekts. Dies ist aber bei den typischen Auflösungen von PIR-Sensoren durch den Sensor nicht warhnehmbar.

Eine zweifelsfreie Detektion von radialen Bewegungen ist deshalb im Vergleich zur Erfassbarkeit von tangentialen Bewegungen oft nur relativ nah am Sensor möglich. Radiale und tangentiale Erfassungseigenschaften unterscheiden sich also.

Aufgabe der vorliegenden Erfindung ist es, die Erfassungseigenschaften für radiale und tangentiale Bewegungen durch Verbesserung der Erfassungseigenschaften für radiale Bewegungen anzugleichen. Diese Aufgabe wird durch den Gegenstand des Anspruchs 1 gelöst. Weitere Ausführungsformen der Erfindung sind der Gegenstand der abhängigen Ansprüche.

Eine Bewegungserfassungsvorrichtung weist eine Mehrzahl von Infrarot-Sensoren zur Bewegungserfassung und ein optisches Element auf, das geeignet ist, auf die Bewegungserfassungsvorrichtung einfallende Infrarotstrahlung auf die Infrarot-Sensoren zu lenken. Hierbei teilt das optische Element einen Erfassungsbereich der Bewegungserfassungsvorrichtung in einen Fernbereich und einen Nahbereich auf. Sichtbereiche der Infrarot-Sensoren in dem Fernbereich sind räumlich getrennt voneinander und die Sichtbereiche von zumindest zwei Infrarot-Sensoren überlappen in dem Nahbereich.

Um Bewegungen in radialer Richtung besser wahrnehmen zu können, wird der Erfassungsbereich einer Bewegungserfassungsvorrichtung demgemäß in zwei Bereiche aufgeteilt: einen Nahbereich und einen Fernbereich. Der Nahbereich liegt hierbei näher an der Bewegungserfassungsvorrichtung als der Fernbereich. Diese Trennung wird durch ein optisches Element, wie z.B. einen Spiegel, eine Linse oder dergleichen bewirkt, in dem im Fernbereich ein Objekt stets auf einen der mehreren IR-Sensoren abgebildet wird, während im Nahbereich ein Objekt auf zumindest zwei IR-Sensoren abgebildet wird.

Tritt nun eine Bewegung vom Fernbereich in den Nahbereich auf, so verändert sich das von den Sensoren ausgegebene Signal von einem Ansprechen nur eines Sensors zu einem Ansprechen von zumindest zwei Sensoren oder einer charakteristischen Abfolge des Ansprechens der zumindest zwei Sensoren. Durch diese unterschiedlichen Detektionscharakteristiken ist es in einfacher Weise möglich, eine radiale Annäherung festzustellen.

Die Mehrzahl von Infrarot-Sensoren kann einen ersten Infrarot-Sensor und einen zweiten Infrarot-Sensor aufweisen, der dem ersten Infrarot-Sensor benachbart angeordnet ist, wobei das optische Element die Sichtbereiche des ersten und des zweiten Infrarot-Sensors in Sichtstrahlen aufteilt. Im Nahbereich ist ein Teil der Sichtstrahlen des ersten Infrarot-Sensors abwechselnd mit einem Teil der Sichtstrahlen des zweiten Infrarot-Sensors angeordnet, während die Sichtstrahlen des ersten und des zweiten Infrarotsensors im Fernbereich ohne einen dazwischen angeordneten Sichtstrahl eines anderen Infrarot-Sensors nebeneinander liegen.

Sichtstrahlen benachbarter, d.h. direkt nebeneinander angeordneter IR-Sensoren verlaufen im Nahbereich also anders als im Fernbereich. Der Begriff Sichtstrahl soll hierbei den Lichtweg angeben, entlang dem der IR-Sensor eine Bewegung erfassen kann, also eine Bewegung "sieht". Ein Sichtstrahl gibt also an, auf welchem Weg IR-Strahlung von einem Objekt zu dem entsprechenden IR-Sensor gelangt. Aufgrund des optischen Elements und der Sensorgeometrie decken die verschiedenen IR-Sensoren der Bewegungserfassungsvorrichtung jeweils nicht den gesamten Raumwinkel ab, sondern nur Teilbereiche daraus.

Das optische Element sorgt hierbei dafür, dass im Fernbereich jedem Sensor ein geschlossener Raumwinkel zugeordnet ist. Ein Objekt, das sich im Fernbereich in diesem Raumwinkel befindet, sendet IR-Strahlung nur zu dem dazugehörigen Sensor. Ebenso erhält dieser Sensor keine IR-Strahlung aus anderen Raumwinkeln. Dadurch wird im Fernbereich eine klare Zuordnung von Raumbereichen zu den einzelnen Sensoren ermöglicht.

Im Nahbereich wechseln sich hingegen Sichtbereiche bzw. Sichtstrahlen zweier benachbarter Sensoren ab, d.h. der Raumbereich, in dem einer der Sensoren IR-Strahlung detektieren kann, ist mit Raumbereichen durchsetzt, in denen auch der andere Sensor die IR-Strahlung detektieren kann. In diesem Sinn kommt es zu einem Überlapp der Erfassungsbereiche der benachbarten Sensoren im Nahbereich. Eine fortgesetzte Bewegung wird abwechselnd oder gleichzeitig von verschiedenen Sensoren detektiert. Im Nahbereich wird also eine Detektionssignatur erzeugt, die sich eindeutig von der Signatur im Fernbereich unterscheidet.

Sind mehr als zwei IR-Sensoren vorhanden, so können die Sichtstrahlen der mittig liegenden Sensoren mit den Sichtstrahlen der beiden benachbarten Sensoren verschränkt sein. Es können aber auch stets jeweils zwei Sensoren gepaart verwendet werden. In beiden Fällen sprechen im Nahbereich stets zwei Sensoren an, während im Fernbereich nur jeweils ein Sensor anspricht. Außer direkt benachbarten Sensoren können alternativ auch beliebige Sensoren den gleichen Abschnitt des Nahbereichs überwachen.

Eine Brennweite des optischen Elements im Fernbereich kann 3 cm bis 5 cm betragen, z.B. 4 cm. Im Nahbereich kann die Brennweite zwischen 2 cm und 3 cm liegen, z.B. bei 2,5 cm. Durch derartig große Brennweiten wird die Auflösung der IR-Sensoren im Nah- und im Fernbereich erhöht. Dadurch können Bewegungen feiner aufgelöst werden, da die Sichtbereiche der IR-Sensoren kleiner werden. Auch Bewegungen kleinerer Objekte, wie etwa die Bewegungen einzelner Füße oder Hände, oder leichte Schwankungen der IR-Strahlung können dadurch erfasst werden. Hierdurch wird wiederum die Detektionsgenauigkeit für radiale Bewegungen weiter gesteigert, so dass sie sich der Detektionsgenauigkeit tangentialer Bewegungen annähert.

Das optische Element kann ein Infrarotstrahlen reflektierender, facettierter Spiegel sein, dessen Facetten die Sichtbereiche der Infrarot-Sensoren definieren. Der Spiegel kann hierbei aus Polycarbonat bestehen, das mit Aluminium und gegebenenfalls einer zusätzlichen Schutzschicht beschichtet ist. Das Aluminium kann hierbei auf das Polycarbonat gesputtert sein. Die Größe und Neigung der einzelnen Facetten des Spiegels bestimmt hierbei, welcher IR-Sensor IR-Strahlung aus welchem Raumbereich empfängt. So ist es in einfacher Weise möglich, Nahbereich und Fernbereich durch unterschiedliche Ausgestaltung der entsprechenden Spiegelflächen zu trennen. Zudem können durch die Orientierung der Spiegelflächen in einfacher Weise die gewünschten Sichtstrahlen der einzelnen IR-Sensoren nach Wunsch eingestellt werden.

Auch lässt sich mittels eines Spiegels bzw. Reflektors in einfacher Weise die oben angesprochene Vergrößerung der Brennweite erreichen, da ein Spiegel weiter von den IR-Sensoren entfernt verwendet werden kann, als z.B. eine Fresnel-Linse. Zudem weist ein Spiegel keine Dispersion auf und dämpft IR-Strahlung weniger stark als Linsen mit ähnlich großer Brennweite. Ein IR-Strahlung reflektierender Spiegel eignet sich daher besonders gut, die oben beschriebenen Ausgestaltungen der Bewegungserfassungsvorrichtung zu realisieren. Alternativ ist dies aber auch mit anderen optischen Elementen möglich, wie z.B. mit Linsensystemen.

Erste reflektierende Facetten des Spiegels, die den Fernbereich auf die Infrarot-Sensoren abbilden, können hierbei in einer ersten Reihe angeordnet sein und zweite reflektierende Facetten des Spiegels, die den Nahbereich auf die Infrarot-Sensoren abbilden, können in einer zweiten Reihe angeordnet sein, ohne die erste Reihe für aus dem Fernbereich kommende Infrarot-Strahlung zu überdecken. Die erste und die zweite Reihe erstrecken sich hierbei entlang einer Richtung und sind senkrecht zu dieser Richtung gegeneinander versetzt. Durch zwei übereinander angeordnete Reihen von Spiegelflächen lassen sich Fernbereich und Nahbereich besonders leicht trennen, z.B. durch einen unterschiedlichen (mittleren) Neigungswinkel der beiden Reihen.

Die Bewegungserfassungsvorrichtung kann des Weiteren eine Aufhängung zum Befestigen der Bewegungserfassungsvorrichtung an einer Wand oder einer Decke aufweisen, wobei bei befestigter Bewegungserfassungsvorrichtung Sichtbereiche der Infrarot-Sensoren im Fernbereich gemessen senkrecht zur Erdoberfläche in einem Winkelbereich von 70° bis 85° und im Nahbereich in einem Winkelbereich von 35° bis 65° liegen. Bei einer Montage an einer Wand liegt der Fernbereich also im Wesentlichen vor der Bewegungserfassungsvorrichtung, während der Nahbereich sich schräg darunter befindet. Befindet sich der Sensor z.B. in 2 Meter Höhe, so befindet sich der Nahbereich am Boden etwa im Abstand von 1,5 m bis 4,5 m, während sich der Fernbereich etwa ab einem Abstand von 4,5 m bis 10 m erstreckt. Bei diesen Werten ist die Bewegungserfassungsvorrichtung optimal für den Gebrauch als typischer Bewegungsmelder mit erhöhter Radialgenauigkeit geeignet.

Die Bewegungserfassungsvorrichtung kann des Weiteren einen Prozessor aufweisen, der geeignet ist, von den Infrarot-Sensoren gemessene Signale auszuwerten, um zu bestimmen, ob eine erfasste Bewegung im Fernbereich oder im Nahbereich stattgefunden hat. Dadurch können die gemessenen Signale in optimaler Weise ausgewertet werden, um die größtmögliche Genauigkeit für die Detektion von radialen Bewegungen zu erreichen

Das optische Element kann den Erfassungsbereich der Bewegungserfassungsvorrichtung in eine Mehrzahl von disjunkten Sichtbereichen aufteilen, von denen der Nahbereich der Bewegungserfassungsvorrichtung am nächsten und der Fernbereich am fernsten ist. Der Nahbereich und der Fernbereich können also nur zwei aus einer Mehrzahl von Sichtbereichen bzw. Erfassungsebenen sein, die durch die Strahlführung des optischen Elements definiert werden. Die verschiedenen Erfassungsebenen definieren hierbei von den IR-Sensoren überwachte Bereiche in verschiedenen Entfernungen. Zum Beispiel kann zwischen den Nahbereich und dem Fernbereich ein weiterer Sichtbereich liegen, in dem Objekte auf eine Weise auf die IR-Sensoren abgebildet werden, die sich von der Abbildung im Nahbereich und im Fernbereich unterscheidet. So kann z.B. im Fernbereich jeder IR-Sensor wie oben beschrieben einem bestimmten Raumwinkel zugeordnet sein. Daran anschließend kann ein Bereich liegen, in dem z.B. jeweils zwei Sensoren ein Objekt wahrnehmen, während im Nahbereich drei oder mehr Sensoren das Objekt erfassen. Auf diese Weise kann der Sichtbereich in radialer Richtung weiter segmentiert werden, wodurch sich die Erfassungsgenauigkeit in radialer Richtung weiter erhöhen lässt.

Die Bewegungserfassungsvorrichtung kann wie oben beschrieben eine Aufhängung zum Befestigen der Bewegungserfassungsvorrichtung an einer Wand oder einer Decke aufweisen. Hierbei kann das optische Element Linsensegmente aufweisen, die geeignet sind, im befestigten Zustand von unten kommende Infrarot-Strahlung auf die Infrarot-Sensoren abzubilden. Die Linsensegmente können aber auch in einer Abdeckung bzw. einem Gehäuse des optischen Elements angeordnet sein. Da von unten kommende IR-Strahlung ebenfalls detektierbar ist, ist die Bewegungserfassungsvorrichtung mit einem Unterkriechschutz versehen, der den Einsatz der Bewegungserfassungsvorrichtung oberhalb einer Türe ermöglicht.

Die Bewegungserfassungsvorrichtung kann des Weiteren ein für Infrarot-Strahlung durchlässiges Gehäuse aufweisen, dessen Wandstärke im auf das optische Element führenden Strahlgang zwischen 0,2 mm und 0,6 mm liegt, z.B. bei 0,5 mm. Auf diese Weise können die IR-Sensoren von äußeren Witterungseinflüssen geschützt werden, ohne die Intensität der einfallenden IR-Strahlung übermäßig abzuschwächen. Insbesondere wenn das optische Element als Spiegel ausgebildet ist, weist die Bewegungserfassungsvorrichtung auf diese Weise bis auf das Gehäuse keine Komponenten, wie z.B. Linsen, auf, die aus dem Nah- oder dem Fernbereich einfallende IR-Strahlung abschwächen. Dadurch gelangt eine höhere Intensität der IR-Strahlung auf die Sensoren, wodurch die Auflösung im Fernbereich und dadurch auch die Detektionsgenauigkeit in radialer Richtung gesteigert werden.

Eine Leuchtenvorrichtung kann eine Bewegungserfassungsvorrichtung wie sie oben beschrieben wurde und zumindest ein Leuchtelement aufweisen, dessen Aktivierung von der Bewegungserfassungsvorrichtung gesteuert wird. Hierdurch können bewegungsgesteuerte Leuchten zur Verfügung gestellt werden, die eine verbesserte Auflösung in radialer Richtung aufweisen.

Die vorliegende Erfindung wird im Folgenden mit Bezug auf die beigefügten Figuren beschrieben. Die folgende Beschreibung ist jedoch rein beispielhaft. Die Erfindung selbst ist nur durch den Gegenstand der Ansprüche bestimmt. Es zeigen
- **Fig. 1A bis 1C**: schematisch Darstellungen einer Bewegungserfassungsvorrichtung;
- **Fig. 2A und 2B**: schematische Darstellungen einer weiteren Bewegungserfassungsvorrichtung;
- **Fig. 3A bis 3D**: schematische Darstellungen einer weiteren Bewegungserfassungsvorrichtung; und
- **Fig. 4A bis 4D**: schematische Darstellungen einer weiteren Bewegungserfassungsvorrichtung.

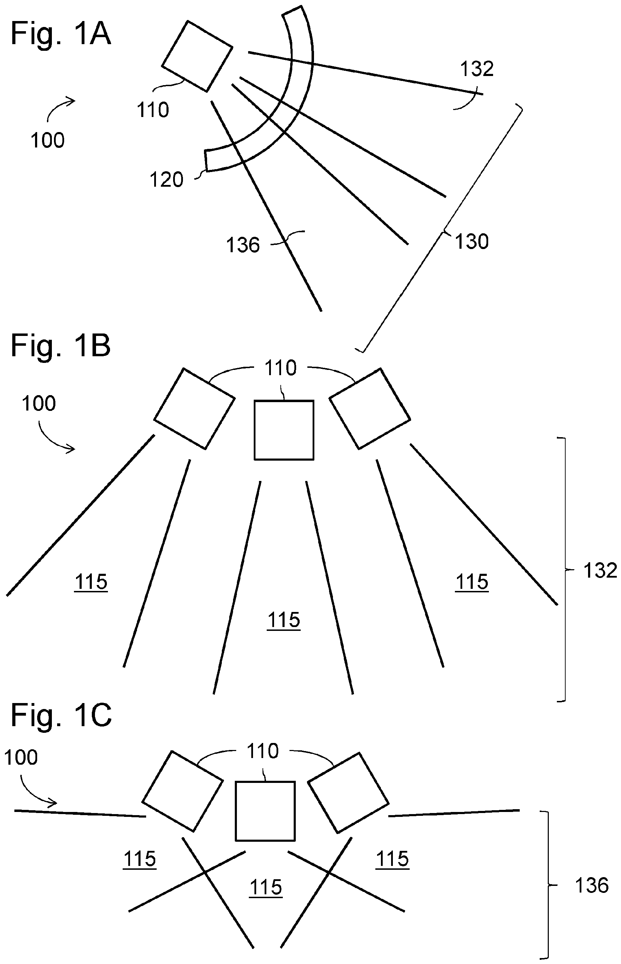

Mit Bezug auf die Fig. 1A bis 1C wird im Folgenden die Funktionsweise einer Bewegungserfassungsvorrichtung 100 anhand von schematischen Darstellungen erläutert.

Die Bewegungserfassungsvorrichtung 100 weist eine Mehrzahl von Infrarot-Sensoren 110 auf, die in der Lage sind, von Objekten abgestrahlte Infrarot-Strahlung zu detektieren. Insbesondere sind die IR-Sensoren 110, gegebenenfalls mittels eines Prozessors zur Signalauswertung, in der Lage, Veränderungen der einfallenden IR-Strahlung aufgrund von Bewegungen zu detektieren und so Bewegungen im Erfassungsbereich 130 der Bewegungserfassungsvorrichtung 100 festzustellen.

Die IR-Sensoren 110 können hierbei in der Form jeglicher aus dem Stand der Technik bekannter, zur Bewegungsdetektion verwendeter IR-Erfassungsgeräte ausgebildet sein. Bevorzugt werden pyroelektrische Sensoren als IR-Sensoren 110 verwendet.

Die IR-Sensoren 110 sind hierbei hinter einem zur Ablenkung von IR-Strahlung geeigneten optischen Element 120 angeordnet. Das optische Element 120 führt IR-Strahlung aus dem Erfassungsbereiche 130 der Bewegungserfassungsvorrichtung 100 mittels Beugung, Brechung, Reflexion oder dergleichen auf die IR-Sensoren 110. Das optische Element 120 bestimmt also den optischen Pfad auf dem IR-Strahlung in die Bewegungserfassungsvorrichtung 100 und insbesondere in die IR-Sensoren 110 fällt.

Das optische Element 120 ist hierbei derart ausgestaltet, dass es den Erfassungsbereich 130 der Bewegungserfassungsvorrichtung 100 in verschiedene Regionen teilt. Diese Unterteilung ist in den Fig. 1A bis 1C schematisch dargestellt, wobei in den Fig. 1B und 1C das optische Element 120 weggelassen wurde, um die Darstellung zu vereinfachen.

Die Fig. 1A zeigt die Bewegungserfassungsvorrichtung 100 von der Seite, d.h. mit im Wesentlichen hintereinander angeordneten IR-Sensoren 110. Obwohl in der Fig. 1A die IR-Sensoren 110 als auf einer Linie fluchtend angeordnet dargestellt sind, können die IR-Sensoren 110, wie z.B. in den Fig. 1B und 1C dargestellt, auch gegeneinander versetzt und verdreht angeordnet sein, solange die Aufteilung des Erfassungsbereichs 130 möglich bleibt, die im Folgenden beschrieben wird.

Wie in der Fig. 1A gezeigt, wird aufgrund des optischen Elements 120 IR-Strahlung aus einem Fernbereich 132, d.h. einem entfernt von der Bewegungserfassungsvorrichtung 100 liegenden Gebiet bzw. einer entfernt liegenden Erfassungsebene, auf einem anderen optischen Pfad zu den IR-Sensoren 110 gelenkt als IR-Strahlung aus einem Nahbereich 136, der näher an der Bewegungserfassungsvorrichtung 100 liegt als der Fernbereich 132.

Wie in der Fig. 1A gezeigt, ist die Bewegungserfassungsvorrichtung 100 in erhöhter Position befestigt, z.B. in einer Höhe zwischen 1,5 m und 3 m, z.B. an einer Wand, einer Decke, einem Pfosten oder dergleichen. Der Fernbereich 132 umfasst dann einen entfernten Bereich des Bodens um die Bewegungserfassungsvorrichtung 100, während der Nahbereich 136 näher an der Bewegungserfassungsvorrichtung 100 liegt. Dementsprechend wird aus dem Fernbereich 132 IR-Strahlung unter einem flacheren Winkel auf die IR-Sensoren 110 gelenkt als aus dem Nahbereich 136. IR-Strahlung aus dem Fernbereich 132 erreicht die IR-Sensoren 110 z.B. unter Winkeln von 70° bis 85° mit Bezug auf die Senkrechte, während IR-Strahlung aus dem Nahbereich 136 unter Winkeln von 35° bis 65° einfällt und durch das optische Element 120 auf die IR-Sensoren 110 gelenkt wird. Bei einer Installationshöhe von 2 bis 2,5 Metern ist der Nahbereich 136 z.B. etwa 4 Meter von der Bewegungserfassungsvorrichtung 100 entfernt, der Fernbereich z.B. etwa 7 Meter.

Das optische Element 120 ist hierbei derart ausgebildet, dass es den Fernbereich 132 und den Nahbereich 136 eindeutig voneinander trennt, d.h. von einem Objekt im Erfassungsbereich 130 abgestrahlte IR-Strahlung erreicht die IR-Sensoren 110 entweder auf einem optischen Pfad aus dem Nahbereich 136 oder einem optischen Pfad aus dem Fernbereich 132, nicht aber entlang beider Pfade. Die IR-Sensoren 110 "sehen" das Objekt also entweder im Fernbereich 132 oder im Nahbereich 136, nicht aber in beiden Bereichen. Wiederum anders ausgedrückt löst ein Objekt, das sich im Fernbereich 132 bewegt nur in solchen IR-Sensoren 110 ein Signal aus, die den Fernbereich 132 sehen können. Das gleiche gilt für Bewegungen im Nahbereich 136.

Der von den IR-Sensoren 110 wahrnehmbare Raumwinkel um die Bewegungserfassungsvorrichtung 100, der den Erfassungsbereich 130 definiert, ist also durch das optische Element 120 senkrecht zur Anordnungsachse der IR-Sensoren 110 in verschiedene, disjunkte Sichtbereiche bzw. Erfassungsebenen getrennt, die hier mit Fernbereich 132 und Nahbereich 136 bezeichnet wurden, da dies der geometrischen Situation bei ordnungsgemäßer Befestigung der Bewegungserfassungsvorrichtung 100 entspricht.

Neben dieser Aufteilung des Erfassungsbereichs 130 senkrecht zur Anordnungsachse der IR-Sensoren 110 unterteilt das optische Element 120 den Erfassungsbereich 130 auch entlang dieser Anordnungsachse in verschiedene Sichtbereiche 115 der IR-Sensoren 110. Die Größe der einzelnen Sichtbereiche 115 unterscheidet sich hierbei aufgrund der Ausgestaltung des optischen Elements 120 im Fernbereiche 132 und im Nahbereich 136.

Die Fig. 1B zeigt schematisch die Sichtbereiche 115 der IR-Sensoren 110 die auf den Fernbereich 132 gerichtet sind. Der in der Fig. 1B links gezeigte IR-Sensor 110 kann hierbei dem IR-Sensor 110 entsprechen, der in der Fig. 1A zu sehen ist. Wie der Fig. 1B zu entnehmen ist, sind die Sichtbereiche 115 der einzelnen IR-Sensoren 110 im Fernbereich 132, d.h. die Bereiche aus denen IR-Strahlung die IR-Sensoren 110 unter einem Winkel von nahezu 90° zur Senkrechten erreicht, voneinander separiert. Jeder IR-Sensor 110 "sieht" in Richtung des Fernbereichs 132 einen Bereich, der von den anderen IR-Sensoren 110 nicht wahrgenommen werden kann. Die Sichtbereiche 115 der einzelnen IR-Sensoren 110 sind im Fernbereich 132 disjunkt. Hierzu kann neben der Ausgestaltung des optischen Elements 120 auch die relative Orientierung der IR-Sensoren 110 beitragen, wie in der Fig. 1B gezeigt.

In Gegensatz zum Fernbereich 132 sind im Nahbereich 136 keine disjunkten Sichtbereiche 115 vorhanden, wie schematisch in der Fig. 1C gezeigt. Im Nahbereich 136 überlappen sich die Sichtbereiche 115 der einzelnen IR-Sensoren 110. Insbesondere können sich die Sichtbereiche 115 von je zwei benachbart angeordneten IR-Sensoren 110 überlappen. Aus dem Nahbereich 136 einfallende IR-Strahlung wird also stets von zwei IR-Sensoren 110 wahrgenommen. Jeder IR-Sensor 110 "sieht" in Richtung des Nahbereichs 136 einen Teil des Sichtfeldes eines anderen, z.B. des benachbarten IR-Sensors 110. Wo der Sichtbereich 115 des einen IR-Sensors 110 aufhört, beginnt vorzugsweise der Sichtbereich 115 des übernächsten IR-Sensors 110, um das Ansprechen von stets zwei IR-Sensoren zu gewährleisten, wenn sich ein Objekt im Nahbereich 136 bewegt. Die Breite der Sichtbereiche 115 verschiedener IR-Sensoren 115 in horizontaler Richtung kann dabei unterschiedlich sein.

Durch diese Ausgestaltung der Strahlgeometrie der einfallenden IR-Strahlung ist es möglich, klar zwischen Bewegungen im Fernbereich 132 und Bewegungen im Nahbereich 136 zu unterscheiden. Ein sich bewegendes Objekt erzeugt nämlich im Fernbereich 132 aufgrund der disjunkten Sichtbereiche 115 nur ein einzelnes Signal in einem der IR-Sensoren 110. Bewegt sich das Objekt aus dem Fernbereich 132 in den Nahbereich 136 sprechen anstatt nur eines IR-Sensors 110 zwei IR-Sensoren 110 an. Die Signatur der Bewegungsdetektion unterscheidet sich also deutlich und kann z.B. mittels eines Prozessors leicht unterschieden werden. Durch das unterschiedliche Ansprechverhalten im Fernbereich 132 und im Nahbereich 136 kann also genauer bestimmt werden, ob sich ein Objekt in radialer Richtung nähert.

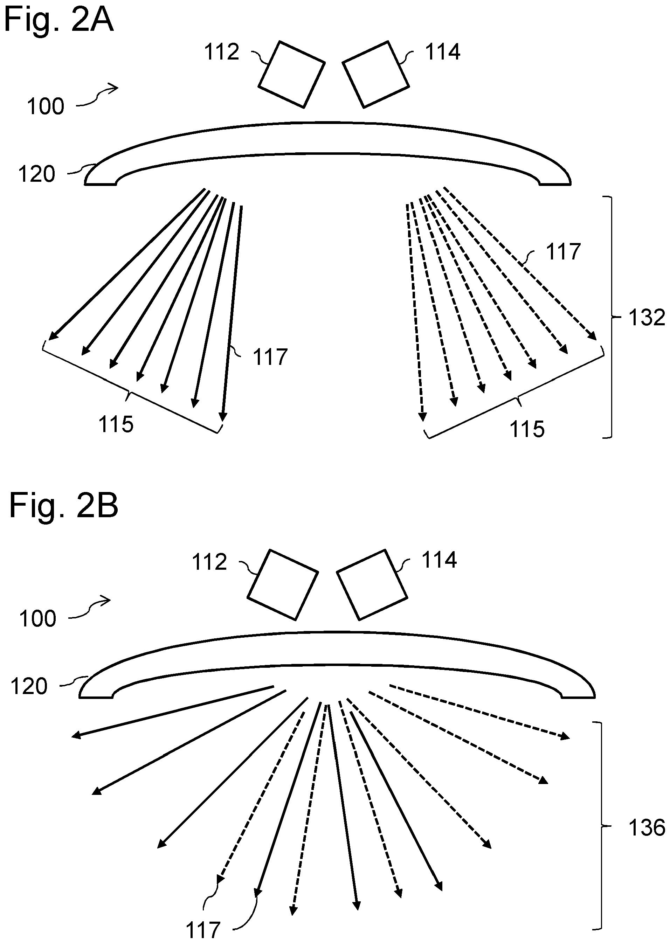

Dieses Prinzip ist in den Fig. 2A und 2B nochmals ausführlicher illustriert. Der einfachen Darstellbarkeit halber sind in den Fig. 2A und 2B nur ein erster IR-Sensor 112 und ein zweiter IR-Sensor 114 dargestellt. Die Fig. 2A zeigt hierbei Sichtbereiche 115 der beiden IR-Sensoren 112, 114 in Richtung des Fernbereichs 132, während die Fig. 2B Sichtbereiche 115 in Richtung des Nahbereichs 136 zeigt.

Wie in der Fig. 2A gezeigt, lässt sich jeder Sichtbereich 115 als eine Mehrzahl von Sichtstrahlen 117 auffassen. Die Sichtstrahlen 117 entsprechen dabei den optischen Pfaden auf denen IR-Strahlung durch das optische Element 120 auf die entsprechenden IR-Sensoren 112, 114 geführt werden, z.B. über Spiegelsegmente oder Linsen. Die Sichtstrahlen 117 des ersten IR-Sensors 112 sind durchgezogen, die des zweiten IR-Sensors 114 gestrichelt dargestellt. Entsprechend der disjunkten Trennung der Sichtbereiche 115 in Richtung des Fernbereichs 132 sind die Sichtstrahlen 117 der IR-Sensoren 112, 114 derart gruppiert, dass kein Sichtstrahl 117 eines anderen IR-Sensors 110 zwischen ihnen liegt. Dies ist äquivalent zur Aussage, dass jeder IR-Sensor 110 in Richtung des Fernbereichs 132 ausschließlich einen bestimmten Raumwinkel erfassen kann.

Eine mögliche Ausgestaltung des Überlappens der Sichtbereiche 115 des ersten IR-Sensors 112 und des zweiten IR-Sensors 114 in Richtung des Nahbereichs 136 ist in der Fig. 2B gezeigt. Hier gehen die Sichtstrahlen 117 der beiden IR-Sensoren 112, 114 zumindest in einem Teilbereich des Sichtbereichs 115 ineinander über. Wie gezeigt, können sich die Sichtstrahlen 117 z.B. abwechseln, d.h. ein Raumbereich, aus dem IR-Strahlung auf den ersten IR-Sensor 112 fällt, ist von Raumbereichen umgeben, aus denen IR-Strahlung auf den zweiten IR-Sensor 114 fällt. Dadurch kann sichergestellt werden, dass ein Objekt im Nahbereich 136 von den beiden benachbarten IR-Sensoren 110 mit den überlappenden Sichtbereichen 115 wahrgenommen wird, z.B. gleichzeitig oder mit einem charakteristischen Wechsel zwischen dem ersten IR-Sensor 112 und dem zweiten IR-Sensor 114, der auf die Durchquerung der Sichtstrahlen 117 durch das sich bewegende Objekt zurückzuführen ist.

Es versteht sich von selbst, dass anstatt der Ausgestaltung der Fig. 2B, d.h. anstatt sich abwechselnder Sichtstrahlen 117 auch andere Strahlgeometrien denkbar sind, die zu einem gleichzeitigen Anschlag zweier benachbarter IR-Sensoren 110 führen. Zum Beispiel können Sichtstrahlen 117 auch auf den gleichen Raumwinkel gerichtet sein oder sich teilweise überschneiden oder überlappen.

Die vorangehenden Beispiele haben sich auf die Situation bezogen, in denen das optische Element 120 das Gebiet um die Bewegungserfassungsvorrichtung 100 in einen Fernbereich 132 und einen Nahbereich 136 aufteilt. Unterschiedliche Detektionssignaturen aufgrund von unterschiedlichen Strahlgängen erlauben es hierbei, die Erfassungsgenauigkeit in radialer Richtung zu verbessern. Es versteht sich von selbst, dass hierbei neben einer Aufteilung in mehr als zwei Bereiche auch weitere Detektionssignaturen verwendet werden können.

Äquivalent zur obigen Beschreibung müssen Varianten erachtet werden, in denen die Zuordnung einer Bewegung zu Fernbereich 132 und Nahbereich 136 über andere Strahlführungen erfolgt oder in denen ein oder mehrere zwischenliegende Bereiche vorhanden sind, die aufgrund der ansprechenden IR-Sensoren 110 von den benachbarten bzw. allen übrigen Bereichen unterschieden werden können. So können z.B. die Sichtbereiche 115 von mehr als nur zwei IR-Sensoren 110 überlappen. Auch können nicht nur die Sichtbereiche 115 von benachbarten IR-Sensoren 110 überlappen. Es ist auch denkbar, dass in verschiedenen Bereichen verschiedene Sensorkombinationen gebildet werden, um verschiedene Detektionssignaturen zu erzielen.

Bei der Verwendung von nur zwei Erfassungsebenen, d.h. von Nahbereich 136 und Fernbereich 132, besteht jedoch der Vorteil die einfallende Strahlungsmenge pro Erfassungsebene zu erhöhen, was die Auflösung und damit Erfassungsgenauigkeit in jeder der Erfassungsebenen steigert.

Eine weitere Verbesserung der Genauigkeit der Erfassung von radialen Bewegungen kann durch die Verwendung eines optischen Elements 120 erreicht werden, dass neben den oben diskutierten Eigenschaften eine große Brennweite aufweist, vorzugsweise für den Fernbereich 132. Insbesondere Brennweiten von 2 cm bis 3 cm, z.B. 2,5 cm für den Nahbereich 136 und 3 cm bis 5 cm, z.B. 4 cm für den Fernbereich 132 führen zu einer Verbesserung der Auflösung von Objekten im Fernbereich, wodurch auch Bewegungen von kleineren Objekten, wie z.B. einer einzelnen Hand oder einem einzelnen Fuß besser erfasst werden können, z.B. auch bei einer radialen Annäherung.

Ein Beispiel für ein optisches Element 120, mit dem sich sowohl die oben mit Bezug auf die Fig. 1A bis 2B beschriebenen Strahlgeometrien als auch eine große Brennweite erzielen lassen, ist ein facettierter Spiegel, der IR-Strahlung reflektiert. Der Spiegel kann hierbei zum Beispiel aus Polycarbonat bestehen und kann z.B. mit Aluminium beschichtet sein, vorzugsweise durch Sputtern. Die einzelnen Facetten des Spiegels können hierbei auf die IR-Sensoren 110 derart ausgerichtet werden, dass Sichtstrahlen 117 bzw. Sichtbereiche 115 durch die Facetten definiert werden, wie sie oben beschrieben wurden. Zudem erlaubt es die reflektierende Lichtführung, die Brennweite im Vergleich zu Linsensystemen zu erhöhen. Auch bildet der Spiegel IR-Strahlung dispersionsfrei ab.

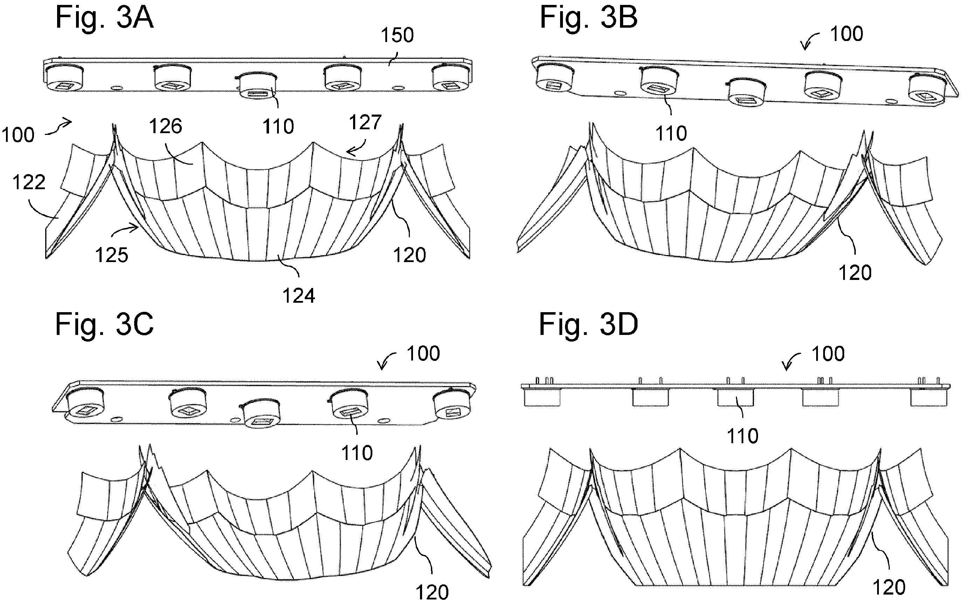

Ein Beispiel für eine Bewegungserfassungsvorrichtung 100, die einen derartigen Spiegel als optisches Element verwendet, ist in den Fig. 3A bis 3D in verschiedenen Ansichten gezeigt.

Der das optische Element darstellende Spiegel 120 weist einer Reihe von Facetten 122 auf, die einfallende IR-Strahlung auf die IR-Sensoren 110 reflektieren. Die IR-Sensoren 110, im Beispiel der Fig. 3A bis 3D fünf Stück, sind auf einer Leiterplatte 150 oberhalb des Spiegels 120 montiert. Die IR-Sensoren 110 sind dabei so gegeneinander verdreht und/oder versetzt, dass ihre Hauptdetektionsrichtungen sich unterscheiden. Die Sichtbereiche der verschiedenen IR-Sensoren 110 würden sich also ohne das Vorhandensein des Spiegels 120 voneinander unterscheiden. Durch die Facetten 122 werden die Sichtbereiche 115 der IR-Sensoren 110 jedoch wie oben beschrieben ausgerichtet.

Zu diesem Zweck sind die Facetten 122 in zwei untereinanderliegenden Reihen 125, 127 angeordnet. Erste Facetten 124 sind in einer ersten Reihe 125 angeordnet und haben eine Neigung, die geeignet ist, IR-Strahlung, die aus dem Fernbereich 132 auf den Spiegel 120 einfällt, auf die IR-Sensoren 110 zu lenken. Hierbei wird durch die Orientierung der ersten Facetten 124 - wie oben beschrieben - jedem IR-Sensor 110 ein eigener, nicht durch Sichtbereiche der anderen IR-Sensoren 110 unterteilter Sichtbereich 115 in Richtung des Fernbereichs 132 zugeordnet.

Wie in den Fig. 3A bis 3D gezeigt weisen die ersten Facetten 124 einen relativ gro-ßen Abstand zu den IR-Sensoren 110 auf, z.B. einen kürzesten Abstand von der Mitte der ersten Facetten 124 bis zu den IR-Sensoren 110, der zwischen 3cm und 5 cm liegt. Dadurch wird eine große Brennweite in Richtung des Fernbereichs 132 realisiert, die diesem Abstand entsprechen kann, wodurch die Auflösung der aus dem Fernbereich 132 einfallenden IR-Strahlung erhöht und die Detektionsgenauigkeit auch für radiale Bewegungen erhöht wird.

Die ersten Facetten 124 sind hierbei innerhalb der ersten Reihe 125 entlang einer Richtung angeordnet. Diese Richtung kann hierbei auch eine eindimensionale, gebogene Kurve sein.

Senkrecht zu dieser Anordnungsrichtung, bei ordnungsgemäßer Befestigung für den Betrieb oberhalb der ersten Reihe 125, ist eine zweite Reihe 127 mit zweiten Facetten 126 angeordnet. Der kürzeste Abstand von der Mitte der zweiten Facetten 126 bis zu den IR-Sensoren 110 kann zwischen 2 cm und 3 cm liegen. Die zweite Facetten 126 weisen eine Neigung und Orientierung auf, die aus dem Nahbereich 136 einfallende IR-Strahlung auf zumindest zwei IR-Sensoren 110 abbildet. Die zweiten Facetten 126 können hierbei derart angeordnet sein, dass durch die Reflexionsflächen der zweiten Facetten 126 definierte Sichtstrahlen 117 zweier benachbarter IR-Sensoren 110 sich abwechseln. Die Sichtbereiche 115 zweier benachbarter IR-Sensoren 110 überlappen also in Richtung des Nahbereichs 136. Wie oben beschrieben kann daher eine radiale Bewegung eindeutig dem Fernbereich 132 oder dem Nahbereich 136 zugeordnet werden.

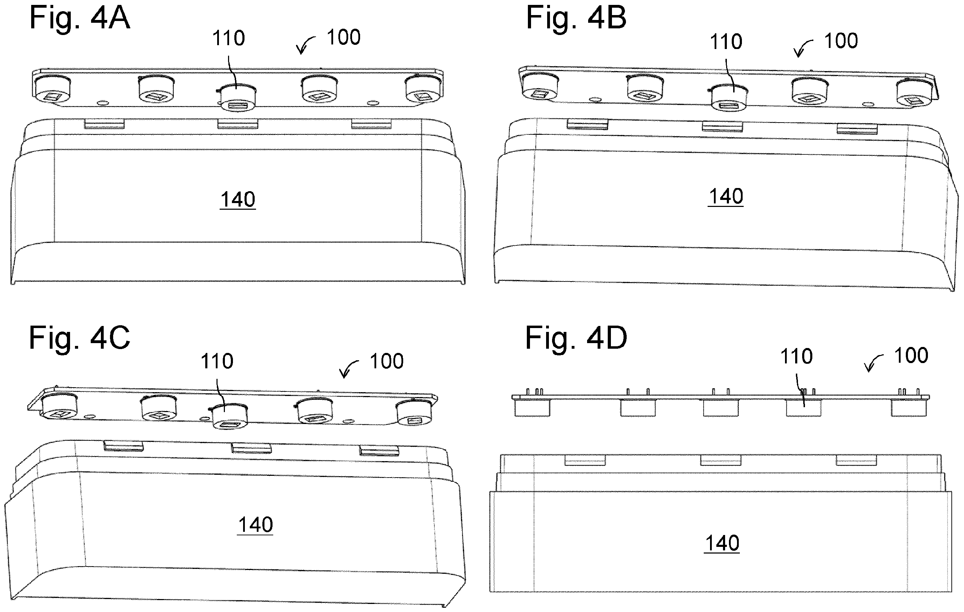

Die in den Fig. 3A bis 3D gezeigte Bewegungserfassungsvorrichtung 100 kann mit einem Gehäuse 140 ausgestattet sein, das den Spiegel 120, aber auch die IR-Sensoren 110 aufweisen kann. Das Gehäuse 140 ist beispielhaft in den Fig. 4A bis 4D gezeigt, in denen der Spiegel 120 innerhalb des Gehäuses 140 angeordnet ist. Die IR-Sensoren 110 können hierbei auch in einem weiteren, separaten Gehäuse untergebracht sein.

Das Gehäuse 140 ist hierbei aus einem im Prinzip aus dem Stand der Technik bekannten Material gefertigt, das für IR-Strahlung durchlässig ist, z.B. aus HDPE, High Density Polyethylen. Hierbei ist die Wandstärke des Gehäuses 140 im Einfallbereich der IR-Strahlung dünn gehalten, z.B. im Bereich zwischen 0,2 mm und 0,6 mm, um eine möglichst große Intensität von IR-Strahlung über den Spiegel 120 auf die IR-Sensoren 110 zu lenken.

Im Vergleich zu typischer Weise verwendeten Linsen kann durch die Verwendung von Spiegel 120 und Gehäuse 140 eine erhöhte Intensität von IR-Strahlung auf die IR-Sensoren 110 gelenkt werden, wodurch sich die Auflösung und damit die Genauigkeit der Messungen auch für radiale Bewegungen erhöht. Aufgrund der flachen Ausgestaltung des Spiegels 120 und der Anordnung unterhalb der IR-Sensoren 110, kann das Gehäuse 140 sehr flach ausgestaltet werden. Die Bewegungserfassungsvorrichtung 100 kann also flach und raumsparend ausgestaltet werden.

Die oben beschriebene Bewegungserfassungsvorrichtung 100 kann über eine Aufhängung verfügen, mit der die Bewegungserfassungsvorrichtung 100 an einer Wand, einer Decke, einem Pfosten oder dergleichen in erhöhter Position befestigt werden kann. Die Aufhängung kann z.B. einen Teil des Gehäuses 140 bilden. Die Bewegungserfassungsvorrichtung 100 kann aber auch Teil einer anderen Vorrichtung, etwa einer Leuchtenvorrichtung, und in dieser integriert sein. Die Aufhängung dieser Vorrichtung dient dann auch als Aufhängung für die Bewegungserfassungsvorrichtung 100. Bei einer Leuchtenvorrichtung steuert die Bewegungserfassungsvorrichtung 100 die Aktivierungsparameter von zumindest einer Leuchte bzw. eines Leuchtelements der Leuchtenvorrichtung.

Zudem kann die Bewegungserfassungsvorrichtung 100 einen Unterkriechschutz aufweisen, der direkt unter der Bewegungserfassungsvorrichtung 100 stattfindende Bewegungen erfasst. Hierzu kann das optische Element 120 zusätzlich mit im Prinzip aus dem Stand der Technik bekannten Linsenelementen für IR-Strahlung versehen sein, die direkt unterhalb der Bewegungserfassungsvorrichtung 100 emittierte IR-Strahlung auf die IR-Sensoren 110 der Bewegungserfassungsvorrichtung 100 lenken. Die Linsen können hierbei auch Teil des Gehäuses 140 sein.

Die oben beschriebene Bewegungserfassungsvorrichtung 100 ermöglicht aufgrund der unterschiedlichen Strahlführung für IR-Strahlung aus dem Fernbereich 132 und dem Nahbereich 136 und der daraus resultierenden unterschiedlichen Detektionscharakteristik der IR-Sensoren 110 eine klare Zuordnung von Bewegungen in den Fernbereich 132 und den Nahbereich 136. Zudem erlaubt die vergrößerte Brennweite eine höhere Auflösung und damit eine zunehmende Genauigkeit auch für die Erfassung von radialen Bewegungen. Hierdurch kann die Erfassungsgenauigkeit für radiale Bewegungen der für tangentiale Bewegungen angeglichen werden.

## Patentansprüche

1. Bewegungserfassungsvorrichtung (100) aufweisend
eine Mehrzahl von Infrarot-Sensoren (110) zur Bewegungserfassung; und
ein optisches Element (120), das geeignet ist, auf die Bewegungserfassungsvorrichtung (100) einfallende Infrarotstrahlung auf die Infrarot-Sensoren (110) zu lenken; wobei
das optische Element (120) einen Erfassungsbereich (130) der Bewegungserfassungsvorrichtung (100) derart in einen Fernbereich (132) und einen Nahbereich (136) aufteilt, dass Infrarotstrahlung die Infrarot-Sensoren (110) entweder auf einem optischen Pfad aus dem Nahbereich (136) oder einem optischen Pfad aus dem Fernbereich (132), nicht aber entlang beider Pfade, erreicht;
Sichtbereiche (115) der Infrarot-Sensoren (110) in dem Fernbereich (132) räumlich getrennt voneinander sind; und
die Sichtbereiche (115) von zumindest zwei Infrarot-Sensoren (110) in dem Nahbereich (136) überlappen.

2. Bewegungserfassungsvorrichtung (100) nach Anspruch 1, wobei
die Mehrzahl von Infrarot-Sensoren (110) einen ersten Infrarot-Sensor (112) und einen zweiten Infrarot-Sensor (114) aufweist, der dem ersten Infrarot-Sensor (112) benachbart angeordnet ist;
das optische Element (120) die Sichtbereiche (115) des ersten und des zweiten Infrarot-Sensors (112, 114) in Sichtstrahlen (117) aufteilt, die optischen Pfaden entsprechen, auf denen die Infrarotstrahlung auf die Infrarot-Sensoren (112, 114) geführt wird;
im Nahbereich (136) ein Teil der Sichtstrahlen (117) des ersten Infrarot-Sensors (112) abwechselnd mit einem Teil der Sichtstrahlen (117) des zweiten Infrarot-Sensors (114) angeordnet ist;
die Sichtstrahlen (117) des ersten Infrarotsensors (112) im Fernbereich (132) ohne einen dazwischen angeordneten Sichtstrahl (117) eines anderen Infrarot-Sensors (110) nebeneinander liegen; und
die Sichtstrahlen (117) des zweiten Infrarotsensors (114) im Fernbereich (132) ohne einen dazwischen angeordneten Sichtstrahl (117) eines anderen Infrarot-Sensors (110) nebeneinander liegen.

3. Bewegungserfassungsvorrichtung (100) nach einem der vorherigen Ansprüche, wobei
eine Brennweite des optischen Elements (120) im Fernbereich (132) zwischen 3 cm und 5 cm liegt und ein Brennweite des optischen Elemente (120) im Nahbereich zwischen 2 cm und 3 cm liegt.

4. Bewegungserfassungsvorrichtung (100) nach einem der vorherigen Ansprüche, wobei
das optische Element (120) ein Infrarotstrahlen reflektierender, facettierter Spiegel ist, dessen Facetten (122) die Sichtbereiche (115) der Infrarot-Sensoren (110) definieren.

5. Bewegungserfassungsvorrichtung (100) nach Anspruch 4, wobei
erste reflektierende Facetten (124) des Spiegels, die den Fernbereich (132) auf die Infrarot-Sensoren (110) abbilden, in einer ersten Reihe (125) angeordnet sind;
zweite reflektierende Facetten (126) des Spiegels, die den Nahbereich (136) auf die Infrarot-Sensoren (110) abbilden, in einer zweiten Reihe (127) angeordnet sind, ohne die erste Reihe (125) für aus dem Fernbereich (132) kommende Infrarot-Strahlung zu überdecken; und
die erste und die zweite Reihe (125, 127) sich entlang einer Richtung erstrecken und senkrecht zu dieser Richtung gegeneinander versetzt sind.

6. Bewegungserfassungsvorrichtung (100) nach einem der vorherigen Ansprüche, des Weiteren mit
einer Aufhängung zum Befestigen der Bewegungserfassungsvorrichtung (100) an einer Wand oder einer Decke; wobei
bei befestigter Bewegungserfassungsvorrichtung (100) Sichtbereiche (115) der Infrarot-Sensoren (100) im Fernbereich (132) gemessen senkrecht zur Erdoberfläche in einem Winkelbereich von 70° bis 85° und im Nahbereich (136) in einem Winkelbereich von 35° bis 65° liegen.

7. Bewegungserfassungsvorrichtung (100) nach einem der vorherigen Ansprüche, des Weiteren mit
einem Prozessor, der geeignet ist, von den Infrarot-Sensoren (110) gemessene Signale auszuwerten, um zu bestimmen, ob eine erfasste Bewegung im Fernbereich (132) oder im Nahbereich (136) stattgefunden hat.

8. Bewegungserfassungsvorrichtung (100) nach einem der vorherigen Ansprüche, wobei
das optische Element (120) den Erfassungsbereich (130) der Bewegungserfassungsvorrichtung (100) in eine Mehrzahl von disjunkten Sichtbereichen (115) aufteilt, von denen der Nahbereich (136) der Bewegungserfassungsvorrichtung am nächsten und der Fernbereich (132) am fernsten ist.

9. Bewegungserfassungsvorrichtung (100) nach einem der vorherigen Ansprüche, des Weiteren mit
einer Aufhängung zum Befestigen der Bewegungserfassungsvorrichtung (100) an einer Wand oder einer Decke; wobei
das optische Element (120) Linsensegmente aufweist, die geeignet sind, im befestigten Zustand von unten kommende Infrarot-Strahlung auf die Infrarot-Sensoren (110) abzubilden.

10. Bewegungserfassungsvorrichtung (100) nach einem der vorherigen Ansprüche, des Weiteren mit
einem für Infrarot-Strahlung durchlässigen Gehäuse (140), dessen Wandstärke im auf das optische Element (120) führenden Strahlgang zwischen 0,2 mm und 0,6 mm liegt.

11. Leuchtenvorrichtung, aufweisend
die Bewegungserfassungsvorrichtung (100) nach einem der vorherigen Ansprüche; und
zumindest ein Leuchtelement, dessen Aktivierung von der Bewegungserfassungsvorrichtung (100) gesteuert wird.

## Claims

1. Movement detection apparatus (100), comprising
a plurality of infrared sensors (110) for detecting movement; and
an optical element (120), which is configured such as to direct infrared radiation impinging onto the movement detection apparatus (100) onto the infrared sensors (110); wherein
the optical element (120) divides a detection region (130) of the movement detection apparatus (100) into a distant region (132) and a close region (136), in such a way that infrared radiation reaches the infrared sensors (110) either on an optical path from the close region (136) or on an optical path from the distant region (132), but not along both paths;
visual ranges (115) of the infrared sensors (110) in the distant region (132) are spatially separated from one another; and
the visual ranges (115) of at least two infrared sensors (110) overlap in the close region (136).

2. Movement detection apparatus (100) according to claim 1, wherein
the plurality of infrared sensors (110) comprise a first infrared sensor (112) and a second infrared sensor (114), which is arranged adjacent to the first infrared sensor (112);
the optical element (120) divides the visual ranges (115) of the first and of the second infrared sensors (112, 114) into eye rays (112) which correspond to the optical paths on which the infrared radiation is being conducted onto the infrared sensors (112, 114);
in the close region (136), a part of the eye rays (117) of the first infrared sensor (112) is arranged alternating with a part of the eye rays (117) of the second infrared sensor (114),
the eye rays (117) of the first infrared sensor (112) in the distant region (132) lie next to one another without an eye ray (117) of another infrared sensor (110) being arranged between them; and
the eye rays (117) of the second infrared sensor (114) in the distant region (132) lie next to one another without an eye ray (117) of another infrared sensor (110) being arranged between them.

3. Movement detection apparatus (100) according to any one of the preceding claims, wherein
a focal length of the optical element (120) in the distant region (132) lies between 3 cm and 5 cm, and a focal length of the optical element (120) in the close region lies between 2 cm and 3 cm.

4. Movement detection apparatus (100) according to any one of the preceding claims, wherein
the optical element (120) is a facetted mirror, reflecting infrared radiation beams, of which the facets (122) define the visual ranges (115) of the infrared sensors (110).

5. Movement detection apparatus (100) according to claim 4, wherein
first reflecting facets (124) of the mirror, which form an image of the distant region (132) onto the infrared sensors (110), are arranged in a first row (125);
second reflecting facets (126) of the mirror, which form an image of the close region (136) onto the infrared sensors (110), are arranged in a second row (127), without the first row (125) covering over the infrared radiation coming from the distant region (132); and
the first and the second row (125, 127) extend along one direction, and are displaced in relation to one another perpendicular to this direction.

6. Movement detection apparatus (100) according to any one of the preceding claims, additionally with
a suspension element for securing the movement detection apparatus (100) to a wall or a ceiling; wherein
with the movement detection apparatus (100) secured, eye ranges (115) of the infrared sensors (100), measured in the distant region (132) perpendicular to the ground surface, lie in an angle range from 70° to 85° and in the close region lie in an angle range from 35° to 65°.

7. Movement detection apparatus (100) according to any one of the preceding claims, additionally with
a processor, which is configured such as to evaluate signals measured by the infrared sensors in order to determine whether a movement which has been detected has taken place in the distant region (132) or in the close region (136).

8. Movement detection apparatus (100) according to any one of the preceding claims, wherein
the optical element (120) divides the detection range (130) of the movement detection apparatus (100) into a plurality of disjunctive visual ranges (115), of which the close region (136) of the movement detection apparatus is the nearest and the distant region (132) is the furthest away.

9. Movement detection apparatus (100) according to any one of the preceding claims, additionally with
a suspension element for securing the movement detection apparatus (100) to a wall or a ceiling; wherein
the optical element (120) comprises lens segments, which are configured, in the secured state, to form images of infrared radiation coming from below onto the infrared sensors (110).

10. Movement detection apparatus (100) according to any one of the preceding claims, additionally with
a housing (140) which is permeable to infrared radiation, of which the wall thickness in the beam path leading to the optical element (120) lies between 0.2 mm and 0.6 mm.

11. Lens device, comprising
The movement detection apparatus (100) according to any one of the preceding claims; and
at least one lighting element, of which the activation is controlled by the movement detection apparatus (100).

## Revendications

1. Dispositif de détection de mouvement (100) présentant
une pluralité de capteurs infrarouges (110) pour la détection de mouvement ; et
un élément optique (120) qui est apte à dévier sur les capteurs infrarouges (110) du rayonnement infrarouge incident sur le dispositif de détection de mouvement (100) ; dans lequel
l'élément optique (120) divise une zone de détection (130) du dispositif de détection de mouvement (100) en une zone lointaine (132) et une zone proche (136) de telle sorte que du rayonnement infrarouge atteigne les capteurs infrarouges (110) soit sur un chemin optique depuis la zone proche (136), soit sur un chemin optique depuis la zone lointaine (132), mais pas le long des deux chemins ;
des zones de vision (115) des capteurs infrarouges (110) dans la zone lointaine (132) sont séparées spatialement les unes des autres ; et
les zones de vision (115) de deux capteurs infrarouges (110) au moins se chevauchent dans la zone proche (136).

2. Dispositif de détection de mouvement (100) selon la revendication 1, dans lequel
la pluralité de capteurs infrarouges (110) présente un premier capteur infrarouge (112) et un deuxième capteur infrarouge (114) qui est disposé au voisinage du premier capteur infrarouge (112) ;
l'élément optique (120) divise les zones de vision (115) des premier et deuxième capteurs infrarouges (112, 114) en des faisceaux de vision (117) qui correspondent à des chemins optiques sur lesquels le rayonnement infrarouge est guidé sur les capteurs infrarouges (112, 114) ;
dans la zone proche (136), une partie des faisceaux de vision (117) du premier capteur infrarouge (112) est disposée en alternance avec une partie des faisceaux de vision (117) du deuxième capteur infrarouge (114) ;
les faisceaux de vision (117) du premier capteur infrarouge (112) sont disposés les uns à côté des autres dans la zone lointaine (132) sans faisceau de vision (117) d'un autre capteur infrarouge (110) disposé entre eux ; et
les faisceaux de vision (117) du deuxième capteur infrarouge (114) sont disposés les uns à côté des autres dans la zone lointaine (132) sans faisceau de vision (117) d'un autre capteur infrarouge (110) disposé entre eux.

3. Dispositif de détection de mouvement (100) selon l'une des revendications précédentes, dans lequel
une distance focale de l'élément optique (120) dans la zone lointaine (132) est située entre 3 cm et 5 cm et une distance focale de l'élément optique (120) dans la zone proche est située entre 2 cm et 3 cm.

4. Dispositif de détection de mouvement (100) selon l'une des revendications précédentes, dans lequel
l'élément optique (120) est un miroir facetté réfléchissant les rayons infrarouges dont les facettes (122) définissent les zones de vision (115) des capteurs infrarouges (110).

5. Dispositif de détection de mouvement (100) selon la revendication 4, dans lequel
de premières facettes réfléchissantes (124) du miroir, qui reproduisent la zone lointaine (132) sur les capteurs infrarouges (110), sont disposées en une première rangée (125) :
de deuxièmes facettes réfléchissantes (126) du miroir, qui reproduisent la zone proche (136) sur les capteurs infrarouges (110), sont disposées en une deuxième rangée (127) sans couvrir la première rangée pour un rayonnement infrarouge venant de la zone lointaine (132) ; et
les première et deuxième rangées (125, 127) s'étendent le long d'une direction et sont décalées l'une par rapport à l'autre perpendiculairement à cette direction.

6. Dispositif de détection de mouvement (100) selon l'une des revendications précédentes, comprenant en outre
une suspension pour fixer le dispositif de détection de mouvement (100) à une paroi ou un plafond ; dans lequel
quand le dispositif de détection de mouvement (100) est fixé, des zones de vision (115) des capteurs infrarouges (110) dans la zone lointaine (132) mesurées perpendiculairement à la surface de la terre sont situées dans une zone angulaire de 70° à 85° et dans la zone proche (136) dans une zone angulaire de 35° à 65°.

7. Dispositif de détection de mouvement (100) selon l'une des revendications précédentes, comprenant en outre
un processeur qui est apte à évaluer des signaux mesurés par les capteurs infrarouges (110) pour déterminer si un mouvement détecté s'est produit dans la zone lointaine (132) ou dans la zone proche (136).

8. Dispositif de détection de mouvement (100) selon l'une des revendications précédentes, dans lequel
l'élément optique (120) divise la zone de détection (130) du dispositif de détection de mouvement (100) en une pluralité de zones de vision (115) disjointes, parmi lesquelles la zone proche (136) est la plus proche du dispositif de détection de mouvement et la zone éloignée (132) la plus éloignée.

9. Dispositif de détection de mouvement (100) selon l'une des revendications précédentes, avec en outre
une suspension pour fixer le dispositif de détection de mouvement (100) à une paroi ou un plafond ; dans lequel
l'élément optique (120) comprend des segments de lentille qui sont aptes à représenter sur les capteurs infrarouges (110), à l'état fixé, un rayonnement infrarouge venant du bas.

10. Dispositif de détection de mouvement (100) selon l'une des revendications précédentes, comprenant en outre
un boîtier (140) laissant passer le rayonnement infrarouge, dont l'épaisseur de paroi dans la trajectoire de rayon menant à l'élément optique (120) est située entre 0,2 mm et 0,6 mm.

11. Dispositif d'éclairage comprenant
le dispositif de détection de mouvement (100) selon l'une des revendications précédentes, et
au moins un élément d'éclairage dont l'activation est commandée par le dispositif de détection de mouvement (100).
